Europäisches Patentamt

European Patent Office

Office européen des brevets

(11) Publication number: **0 085 578**
**B1**

## EUROPEAN PATENT SPECIFICATION

(45) Date of publication of patent specification: **28.12.88**

(51) Int. Cl.⁴: **G 11 B 5/09** // H04N5/782

(21) Application number: **83300530.9**

(22) Date of filing: **02.02.83**

(54) Apparatus for recording an information signal comprising a video signal and an audio signal.

(30) Priority: **02.02.82 JP 15287/82**

(43) Date of publication of application:
**10.08.83 Bulletin 83/32**

(45) Publication of the grant of the patent:
**28.12.88 Bulletin 88/52**

(84) Designated Contracting States:
**AT DE FR GB IT NL**

(56) References cited:
**EP-A-0 038 566
EP-A-0 080 897
EP-A-0 084 969
EP-A-0 085 517
FR-A-2 520 959
GB-A-2 050 677
GB-A-2 071 879
GB-A-2 092 814
GB-A-2 097 968
US-A-3 580 992
US-A-4 303 950**

**SMPTE JOURNAL, vol. 90, no. 2, February 1981, pages 113-115, Scarsdale, New York, US; H. FOERSTER et al.: "Digital- Video recording in the 625-line system"**

(73) Proprietor: **SONY CORPORATION**
**7-35 Kitashinagawa 6-Chome Shinagawa-ku Tokyo 141 (JP)**

(72) Inventor: **Morio, Minoru**
**c/o Patent Div. Sony Corp. 7-35 Kitashinagawa-6 Shinagawa-ku Tokyo (JP)**
Inventor: **Nakano, Kenji**
**c/o Patent Division Sony Corporation 7-35 Kitashinagawa-6 Shinagawa-ku Tokyo (JP)**
Inventor: **Moriwaki, Hisayoshi**
**c/o Patent Division Sony Corporation 7-35 Kitashinagawa-6 Shinagawa-ku Tokyo (JP)**

(74) Representative: **Thomas, Christopher Hugo et al**
**D Young & Co 10 Staple Inn London WC1V 7RD (GB)**

## Description

This invention relates to apparatus for recording an information signal comprising a video signal and an audio signal.

Information signal recording and reproducing apparatus for recording and reproducing a colour video signal on a magnetic tape by means of a rotary magnetic head assembly are well known. For example, in a helical scan video tape recorder (VTR), at least one rotary magnetic head is rotated at a predetermined angle with respect to the longitudinal or tape running direction of a magnetic tape as the magnetic tape is advanced, so as to form successive video tracks extending obliquely on the magnetic tape. With the helical scan VTR, it is possible to achieve high density recording of the video signal by advancing the magnetic tape at a slow running speed and, at the same time, providing a high relative speed between the magnetic head assembly and the magnetic tape. However, with known helical scan VTRs in which an audio signal is recorded and reproduced on an audio track extending in the longitudinal or tape running direction of the magnetic tape by a stationary magnetic head, there results a deterioration of the signal-to-noise (S/N) ratio and an increase in the wow and flutter when the speed of advancement of the magnetic tape is reduced. This, of course, results in a deterioration in the quality of the reproduced audio signal, causing the audio signal to have unsatisfactory quality when reproduced.

In order to overcome this problem in the recording and reproducing of an audio signal by a stationary magnetic head, it has been proposed to effect the recording and reproducing of the audio signal by means of a rotary magnetic head. With this proposal, an overscan section is provided for each oblique track, for example, by increasing the tape winding angle about the guide drum assembly of the helical scan VTR. In this manner, each record track obliquely formed on the magnetic tape by the rotary magnetic head assembly includes a video track section and an audio track section, the audio track section corresponding to the overscan section. The audio signal that is recorded and reproduced with respect to the audio track section of each track is processed as high density data obtained by processing the signal with a time axis or base compression and a time axis or base expansion.

In one known apparatus, two rotary magnetic heads are provided and are spaced apart by 180°. Thus, each head scans alternate ones of the successive tracks extending obliquely on the magnetic tape. It has been proposed to digitize and compress the audio signal and record it in the overscan section at the beginning of each track with such known apparatus. This provides the desirable feature of recording the video signal and the high quality digitized audio signal in separate sections of each track.

In some cases it may also be desirable to record only the digitized audio signal in the entire portion of each track, that is, in both the video track section and the audio track section, without recording any video signal therein. With this latter arrangement, since the audio signal is recorded as a digitized audio signal high quality audio reproduction can be achieved. However, because the audio signal is recorded in digital form, error correction codes, run-in or preamble signals and the like are added to the digitized audio signal. Moreover, because the digitized audio signal is compressed, the digitized audio signal is an intermittent signal, that is, with time gaps between compressed portions of the digitized audio signal. As a result, timing of the audio signal to be recorded in the entire portion of each record track makes it difficult to utilize the same circuitry as that used for processing a digitized audio signal which is recorded in only the overscan section of each track and combined with a video signal recorded in the main section of each track, thereby requiring the use of separate audio processing circuitry. This duplication of circuitry is of course wasteful and relatively expensive. Also, if an audio signal is successively recorded in the entire portion of each track, it becomes relatively time consuming and troublesome to search for a particular audio selection.

U.S. Patent Specification US—A—4,303,950 discloses a helical scan video tape recorder having a main section of each track for recording a video signal and an overscan section of each track for recording a time-compressed audio signal. UK Patent Specification GB—A—2,050,677 discloses a helical scan video tape recorder in which digital time-comprssed audio signals may be sequentially selected for recording from four independent audio input channels into respective tracks or into the same track.

According to the present invention there is provided apparatus for recording an information signal comprising at least an audio signal in a plurality of successive oblique tracks on a record medium, the apparatus comprising:

audio signal processing means for converting said audio signal into time-compressed digital form;

video signal processing means for processing a video signal of said information signal to produce an output video signal;

transducer means for recording said output video signal and said digitized audio signal in said tracks on said record medium;

switch means for supplying said output video signal and said digitized audio signal to said transducer means; and

control means for controlling said switch means to supply said output video signal and said digitized audio signal to said transducer means during a video use mode so that said transducer means records said output video signal in a main section of each said track and said digitized audio signal in an overscan section of each said track; characterized by:

said control means also controlling said switch means to supply only said digitized audio signal

to said transducer means during an audio use mode; and

timing means which operates such that said main section of each said track is divided into a plurality of segments in the track length direction and said overscan section of each said track comprises one segment, each of said segments having a substantially equal track length, so that in said audio use mode said transducer means selectively records said digitized audio signal in any arbitrary one of said segments in said main section or said overscan section of each said track under control of further switch means.

The invention will now be described by way of example with reference to the accompanying drawings, in which:

Figure 1 is a block diagram of apparatus for recording an information signal;

Figure 2 is a block diagram of apparatus for reproducing an information signal;

Figures 3A to 3I are waveform diagrams used for explaining the operation of the apparatus of Figures 1 and 2;

Figure 4 is a frequency diagram illustrating the frequency spectrum of a processed video signal;

Figure 5 is a frequency diagram illustrating the frequency spectrum of a processed PCM audio signal;

Figure 6 is a schematic plan view of a rotary magnetic head assembly for a helical scan VTR that can be used with embodiments of the invention;

Figure 7 is a schematic plan view of a section of magnetic tape showing the arrangement in which the video and audio signals are recorded with the apparatus of Figure 1 in a video use mode; and

Figures 8A to 8C are schematic plan views of sections of magnetic tape showing the recording of an audio signal with the apparatus of Figure 1 in an audio use mode.

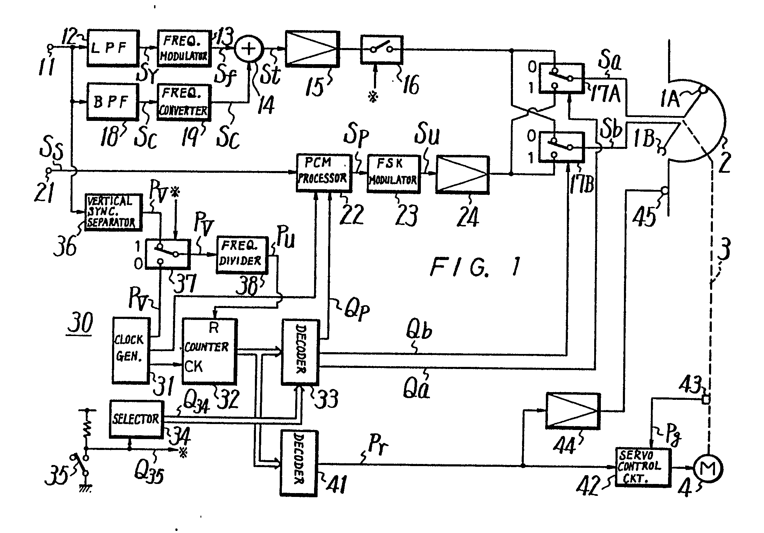

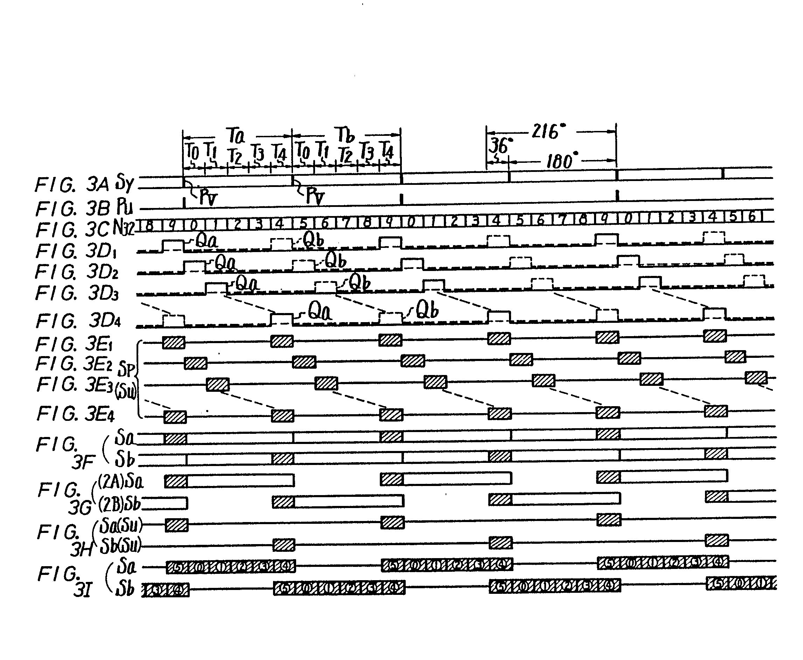

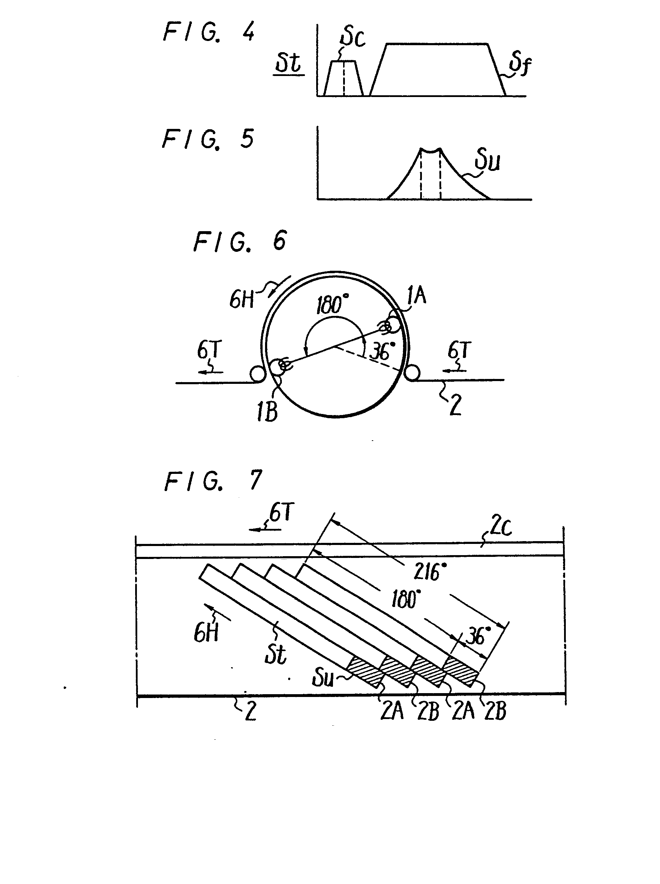

Referring initially to Figure 1, a recording section of a helical scan VTR according to one embodiment of the invention includes a low-pass filter (LPF) 12 supplied with a colour video signal from an input terminal 11. The luminance component Sy, shown in Figure 3A, is separated from the input colour video signal by the LPF 12 and supplied to a frequency-modulation circuit 13 which, in turn, frequency modulates the luminance component Sy to produce a frequency-modulated luminance signal Sf and supplies the frequency-modulated luminance signal Sf to one input of an adder 14. The colour video signal from the input terminal 11 is also supplied to a band-pass filter (BPF) 18 which separates the chrominance component Sc therefrom. The chrominance component Sc is then frequency converted to a lower frequency band by a frequency converter 19 which supplies a frequency-converter chrominance signal Sc to another input of the adder 14, the adder 14 functioning to combine the frequency-modulated luminance signal Sf and the frequency-converted chrominance signal Sc to produce a combined video signal St. It is to be noted that the carrier of the chrominance signal Sc preferably has its frequency and phase changed so as to be in an interleaving relation to successive field intervals. Moreover, it is to be appreciated that the signals Sf and Sc occupy distinct frequency bands and therefore do not interfere with one another, as shown Figure 4. The combined video signal St is then supplied through a recording amplifier 15 and switches 16, 17A and 17B, as will be discussed in greater detail hereinafter, to rotary magnetic heads 1A and 1B to be recorded in successive parallel tracks 2A and 2B on a magnetic tape 2.

As will be appreciated from the discussion hereinafter, the switch circuit 16 is turned ON to supply the video signal St to the switches 17A and 17B during a video use mode, in response to a selection signal $Q_{35}$ from a selecting switch 35. Hereinafter, reference to a video use mode will mean the recording of a digitized audio signal in the overscan section of each track and the recording of a video signal in the main section of each track, while reference to an audio use mode will mean the recording of a digitized audio signal both in the overscan section and the main section of each track.

In addition, the VTR of Figure 1 is designed also to record a pulse code modulated (PCM) audio signal in at least an audio track section or overscan section of each track 2A and 2B during the first 36° rotation of the heads 1A and 1B with respect to each track 2A and 2B.

More particularly, an analog audio signal Ss from an input terminal 21 is supplied to a PCM processing circuit 22 which includes an analog-to-digital (A/D) converting circuit which converts the analog audio signal Ss to a digital signal, a PCM encoding circuit which encodes the digitized audio signal and adds error correcting codes and a run-in (preamble) signal thereto to produce an encoded PCM audio signal, and a compression circuit which compresses the encoded PCM audio signal to produce a compressed PCM audio signal Sp at the output of the PCM processing circuit 22. It is to be appreciated that the audio signal Sp is intermittent, as shown in Figure 3E, as a result of the aforementioned compression.

The output signal from the PCM processing circuit 22 is then supplied to a frequency shift key (FSK) modulation circuit 23 which frequency modulates the PCM audio signal Sp from the PCM processing circuit 22. The FSK modulation circuit 23 may include first and second oscillators which generate oscillation signals having frequencies $f_1$ and $f_2$, respectively, and a switching circuit coupled to the PCM processing circuit 22 for selecting the oscillation signal generated by one of the oscillators in response to the PCM audio signal Sp supplied thereto. For example, the switching circuit may be responsive to each logic level "0" portion of the PCM audio signal to select the first oscillation signal having a frequency $f_1$, and responsive to each logic level "1" portion of the PCM audio signal to select the oscillation signal having a frequency $f_2$. As a result, the FSK modulation circuit 23 may be thought of as modulating logic level "0" portions of the PCM audio signal Sp with the oscillation signal having a frequency $f_1$, and modulating logic level "1" portions of the PCM audio signal Sp with the oscillation signal having a frequency $f_2$.

The output PCM audio signal Su from the FSK modulation circuit 23, the frequency spectrum of which is shown in Figure 5, is supplied through a recording amplifier 24 to input contacts "1" of the switches 17A and 17B which are formed by change-over switch circuits, respectively, while the combined video signal St is supplied to input contacts "0" of the switches 17A and 17B, respectively. Each of the switches 17A and 17B includes a movable arm which switches either the PCM audio signal Su from the recording amplifier 24 or the combined video signal St from the recording amplifier 15 to the heads 1A and 1B, in accordance with the timing chart shown in Figure 3G during the video use mode. In this manner, during the video use mode, the combined video signal St is recorded in the trailing main section of each record track 2A and 2B corresponding to the last 180° rotation of the heads 1A and 1B with respect to the record tracks, while the PCM audio signal Su is recorded in the overscan section of each track 2A and 2B at the leading edge thereof corresponding to the first 36° rotation of the heads 1A and 1B with respect to the tracks 2A and 2B, as shown in Figure 7.

More particularly, the switches 17A and 17B are responsive to switch control signals Qa and Qb, respectively, shown in Figure 3D, supplied thereto from a decoder 33, to couple the input contacts "0" or "1" thereof to the respective heads 1A and 1B. When the switch control signal Qa is at a high or logic "1" level and the switch control signal Qb is at a low or logic "0" level, the movable arms of the switches 17A and 17B are controlled to connect the contacts "1" and "0", respectively, to the outputs thereof. More particularly, at such time, when the respective heads 1A and 1B are in contact with the tape 2, the combined video signal St from the recording amplifier 15 is supplied to the head 1B to be recorded in the main section of a track 2B during the last 180° rotation of the head 1B with respect to the track 2B, and the PCM audio signal Su is supplied by the recording amplifier 24 to the head 1A to be recorded in the overscan section at the leading portion of the next adjacent track 2A, as shown in Figure 7. When the switch control signal Qa is at a low or logic "0" level and the switch control signal Qb is at a high or logic "1" level, the reverse condition occurs, namely, the PCM audio signal Su is supplied through the switch 17B to the head 1B, while the combined video signal St is supplied through the switch 17A to the head 1A following the PCM audio signal Su that had been recorded during the previous field interval in the same track 2A or 2B.

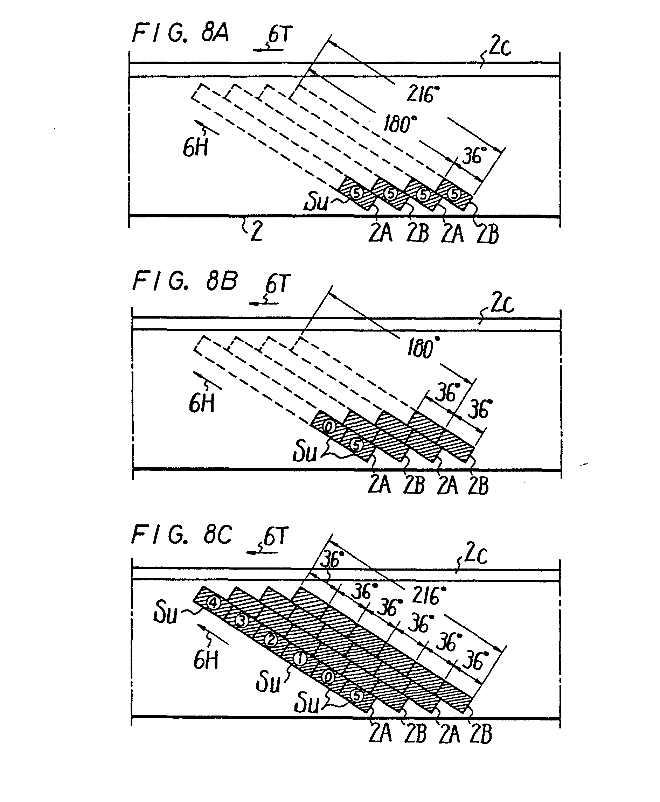

As shown in Figure 6, the heads 1A and 1B are arranged to subtend an angle of 180°, that is, the two rotary magnetic heads A and 1B are arranged in diametrically opposing relation to each other.

The rotary magnetic head assembly includes a rotary guide drum which is rotated along with the heads 1A and 1B secured thereto, in the direction of an arrow 6H, and the tape 2 is helically wound about the outer periphery of the rotary guide drum so as to subtend an angle of approximately 216°. The tape 2 is advanced at a constant speed in the direction of an arrow 6T by a tape drive system (not shown) comprising a capstan and pinch roller and is guided about the guide drum by guide rollers or pins. During the recording operation, the heads 1A and 1B alternately trace the tracks 2A and 2B, as shown, for example, in Figure 7. In this manner, each track 2A is used for recording video and audio signals in odd field intervals, while the remaining alternate tracks 2B are used for recording video and audio signals in even field intervals. In addition, heads 1A and 1B are provided with different azimuth angles so that the signals are recorded in adjacent tracks 2A and 2B with different azimuth angles.

It is to be appreciated that since the angle between the heads 1A and 1B is less than the angle subtended by the tape 21 wound about the outer periphery of the rotary guide drum, the heads 1A and 1B are simultaneously in contact with the tape 2 during an overscan or overlap period. Thus, as previously discussed with respect to Figure 7, with the recording section of Figure 1, in the video use mode, during the first 36° rotation of the heads 1A and 1B, the PCM audio signal Su is recorded in the tracks 2A and 2B, respectively. During the next 180° rotation of the heads 1A and 1B, the combined video signal St is recorded in the main section of the tracks 2A and 2B, respectively, with each track 2A and 2B containing information corresponding to one field interval of the video signal. In addition, a servo control track 2C provided at the upper edge of the tape 2 has recorded therein a control pulse signal Pr in synchronism with the vertical synchronizing signal Pv of the video signal.

The recording section of the helical scan VTR of Figure 1 also includes a control circuit 30 for selectively controlling the apparatus to record the video signal St in the main section and the PCM audio signal Su in the overscan section of each track 2A and 2B during the video use mode, and for recording only the PCM audio signal Su in both the overscan section and main section of each track 2A and 2B during the audio use mode. More particularly, the selecting switch 35 includes an arm movable between an open and closed position, thereby providing the selection signal $Q_{35}$ which is at a logic "1" level during the video use mode and is at a logic "0" level during the audio use mode. For example, when the selecting switch 35 is closed, the output therefrom is connected to ground so that the selecting signal $Q_{35}$ is at a logic "0" level. On the other hand, when the selecting switch 35 is open, the output of the selecting switch 35 is connected to a high potential so that the selecting signal $Q_{35}$ is at a high or logic "1" level. Thus, during the video use mode, the selection signal $Q_{35}$ which is at a logic "1" level is supplied to the switch 16 for turning it ON so that the video signal St can be supplied through the switches 17A and 17B to the heads 1A and 1B respectively.

The control circuit 30 includes a vertical synchronizing signal separating circuit 36 which separates the vertical synchronizing signal Pv (Figure 3A) from the colour video signal. The vertical synchronizing signal Pv is supplied to a fixed contact "1" of a switch 37 having a movable arm controlled by the selection signal $Q_{35}$ to connect either its input contact "1" or another input contact "0" to the output thereof. During the video use mode, when the selection signal $Q_{35}$ is at a logic "1" level, the movable arm of the switch 37 is connected to the input contact "1" so that the vertical synchronizing signal Pv from the vertical synchronizing signal separating circuit 36 is supplied through the switch 37 to a frequency divider 38 which produces a pulse signal Pu synchronized with the vertical synchronizing signal Pv and which occurs at the beginning of each odd-numbered field interval Ta, as shown in Figure 3B. The pulse signal Pu is then supplied to a reset input terminal of a counter 32 which is supplied at its clock input terminal CK with clock pulses generated by a clock generator 31. As an example which will be used hereinafter, the frequency of the clock pulses from the clock generator 31 is five times as high as that of the field frequency, that is, the vertical synchronizing signal Pv, and the count value $N_{32}$ of the counter 32 is successively incremented by one, starting from "0", at the beginning of each odd-numbered field interval Ta. In this regard, the count value $N_{32}$ increments from a value "0" to a value "4" during time periods $T_0$ to $T_4$ in each odd numbered field interval Ta, and increments from a value "5" to a value "9" during time periods $T_0$ to $t_4$ in each even-numbred field interval Tb. The count value $N_{32}$ from the counter 32 is supplied to the decoder 33. The clock generator 31 also supplies clock pulses to the PCM processing circuit 22 for controlling various timing functions therein.

In addition, the selection signal $Q_{35}$ from the switch 35 is supplied to a selecting circuit 34 as an inhibit signal whereby, during the video use mode when the selection signal $Q_{35}$ is at a logic "1" level, the selecting circuit 34, in response to the selection signal $Q_{35}$, controls the decoder 33 to select desired values of the count value $N_{32}$. More particularly, during the video use mode, the selecting circuit 34 produces a signal $Q_{34}$ which designates the count values "9" and "4". Thus, in response thereto, the decoder 33 produces the aforementioned switch control signals Qa and Qb which respectively are at a logic "1" level when the count value $N_{32}$ is equal to "9" and "4", as shown in Figure 3D. In this manner, the switch control signals Qa and Qb control the switching of the switches 17A and 17B to supply the video signal St and the compressed PCM audio signal Su to the heads 1A and 1B so as to record these signals in the form shown in Figurs 7, as previously described. Moreover, the decoder 33 generates an OR control signal Qp in response to the switch control signals Qa and Qb such that the control signal Qp is at a logic "1" level during each period $T_4$ corresponding to the count values of "9" and "4" and which is supplied to the PCM processing circuit 22 for enabling it and thereby designating the timing of the PCM signal Sp generated therefrom so that the PCM audio signal Su is recorded in the overscan section of each track, as shown in Figure 3E1, and corresponding to the time period $T_4$ in each field interval Ta and Tb.

In addition, the count value $N_{32}$ of the counter 32 is supplied to a decoder 41 which produces the control pulse signal Pr which is at a logic "1" level at times when the count value $N_{32}$ is equal to zero, that is, at the beginning of each odd-numbered field interval Ta. The control pulse signal Pr is supplied to a recording amplifier 44 which, in turn, supplies the control pulse signal Pr, which is in synchronism with the vertical synchronizing signal Pv, to a magnetic head 45 positioned at the upper edge of the magnetic tape 2 for recording the control pulse signal in the servo control track 2C. In order to control the rotary speed and phase of the magnetic heads 1A and 1B, a pulse generator 43 associated with a rotary shaft 3 about which the magnetic heads 1A and 1B are rotated, produces a pulse Pg for each revolution of the magnetic heads 1A and 1B. In response to the pulses Pg and the control pulse signal Pr supplied thereto, a servo control circuit 42 supplies an output signal to a motor 4 which controls the rotary speed and phase of the heads 1A and 1B such that rotation of the heads 1A and 1B occurs in synchronism with the vertical synchronizing signal Pv and such that there is a rotational delay of 36° from the beginning of each track 2A and 2B before each head 1A and 1B begins recording the combined video signal St in the respective track 2A and 2B, as shown in Figure 7. In other words, as shown in Figure 7, each track 2A and 2B corresponds to a rotation of 216° for each respective head 1A and 1B whereby, when one head 1A and 1B is located at an angle of 36° from the entrance of a track 2A and 2B, the other head 1B or 1A is located at the exit of the previous track 2B or 2A. During the first 36° rotation for each track 2A and 2B, the PCM audio signal Su is recorded in the respective tracks 2A and 2B. During the following 180° rotation, the combined video signal St is supplied through the recording amplifier 15 to the respective head 1A and 1B.

During the audio use mode, the selection signal $Q_{35}$ from the selecting switch 35 is at a logic "0" level. As a result, the switch 16 is maintained in an open or OFF position so that the combined video signal St is not supplied to the switches 17A and 17B. It is to be appreciated that, at such time, no video signal is present, so that the vertical synchronizing signal separating circuit 36 does not supply the aforementioned vertical synchronizing signal Pv to the "1" contact of the switch 37. In this case, the clock generator 31 produces a substitute or quasi-vertical synchronizing Pv having a frequency substantially identical to a vertical synchronizing signal Pv that would be produced by the vertical synchronizing signal separating circuit 36. The substitute vertical synchronizing signal Pv is supplied to the "0" contact of the switch 37 and the movable arm thereof is controlled by the selection signal $Q_{35}$ to connect the "0" contact to the output thereof and thereby supply the substitute vertical synchronizing signal Pv to the frequency divider 38.

During the audio use mode, the user controls the selecting circuit 34 to record the audio signal in a desired segment ⑤, ⓪, ①, ②, ③ or ④ in the plurality of tracks 2A and 2B. It is to be appreciated that this selection of the segment of each track 2A and 2B on which the audio signal is to be recorded is made possible by the selection signal $Q_{35}$ which is at a logic "0" level during the audio use mode.

In contradistinction thereo, during the video use mode, the selecting circuit 34 is controlled by the selection signal $Q_{35}$ which is at a logic "1" level to select only the segment ⑤, that is, the overscan section of each track 2A and 2B for recording the PCM audio signal Su. During the audio use mode, if a user actuates the selecting circuit 34 to produce the signal $Q_{34}$ which designates count values $N_{32}$ of "9" and "4" the decoder 33 produces the switch control signals Qa and Qb having the phase relation shown in Figure 3D1. It is to be remembered that the control signal Qp is produced by an OR operation of the switch control signals Qa and Qb whereby the PCM processing circuit 22 produces the PCM audio signal Sp during each time period $T_0$ of both odd-numbered and even-numbered field intervals Ta and Tb, as shown in Figure 3E1. The PCM video signal Sp generated at such time by the PCM processing circuit 22 is supplied to the FSK modulation circuit 23 which produces the PCM audio signal Su and supplies it through the recording amplifier 24 to the switches 17A and 17B. The switches 17A and 17B are controlled to connect the movable arms thereof to input contacts "1" only when the switch control signals Qa and Qb are at logic "1" levels, as shown in Figure 3D1. In this manner, the PCM audio signal Su is supplied to the heads 1A and 1B only during the time periods $T_4$ of the field intervals Ta and Tb so that the PCM audio signal Su is recorded in the segment ⑤ of each successive track 2A and 2B, that is, during the first 36° rotation of each head 1A and 1B with respect to the tracks 2A and 2B and corresponding to the aforementioned overscan section of each track 2A and 2B. It is to be appreciated that, at such time, no signals are recorded in the main section of each track 2A and 2B during the remaining 180° rotation of the heads 1A and 1B with respect to the tracks 2A and 2B. Thus, when the selecting circuit 34 is switched to select the count values $N_{32}$ of "9" and "4", the PCM audio signal Su is recorded in the same manner as in the video use mode.

If it is desired to record the PCM audio signal Su in another segment ⓪, ①, ②, ③ or ④, the use merely acruates the selecting circuit 34 so that it controls the decoder 33 to change the phase of the switch control signals Qa and Qb, whereby the PCM audio signal Su can be recorded in another segment of each of the tracks 2A and 2B corresponding to a 36° rotation of the heads 1A and 1B, as shown in Figure 8C. For example, when the selecting circuit 34 designates the count value $N_{32}$ of "0" and "5", the decoder 33 produces the switch control signals Qa and Qb as shown in Figure 3D2 so that the switches 17A and 17B supply the PCM audio signal Su from the recording amplifier 24 to the heads 1A and 1B, respectively, only during the time periods $T_0$ of each field interval Ta and Tb. Further, at such time, the control signal Qp, which is produced in response to the switch control signals Qa and Qb, enables the PCM processing circuit 22 to produce the PCM audio signal Sp only during the aforementioned time periods $T_0$ of each field interval Ta and Tb. In this manner, the PCM audio signal Su is recorded in each segment ⓪ of each track 2A and 2B, as shown in Figure 8B, while no signal is recorded in any other segment of each track 2A and 2B. Thus, the user can select any desired segment of the tracks 2A and 2B in which the PCM audio signal Su is to be recorded. Figures 3D3 and 3D4 show the timing of the switch control signals Qa and Qb for recording the PCM audio signal Su in the 36° segment ① and last 36° segment ④, respectively, of each track 2A and 2B.

It is to be appreciated that, as described above, the same audio signal processing circuitry, namely, the PCM processing circuit 22 and the FSK modulatic circuit 23 can be used as that used during the video use mode. This is particularly important since the PCM processing circuit 22 comprising, for example, an analog-to-digital converter, a PCM encoder, and a compression circuit is relatively expensive and complicated in comparison with the decoder 33 and the selecting circuit 34 used for changing over the recording section of Figure 1 between a video use mode and an audio use mode. It is to be appreciated that the PCM audio signal reproduces as a high quality analog audio signal with a good tone quality, good frequency characteristics, high S/N ratio, and the like.

In addition, since the PCM audio signal Su is recorded in the entire portion of each track 2A and 2B, that is, in segment ⑤ corresponding to the overscan section of each track 2A and cn segments ⓪ to ④ corresponding to the main section of each track 2A and 2B, as shown in Figure 3I, with each segment containing information corresponding in time to one field interval of a video signal, each track 2A and 2B contains audio information corresponding to six field intervals. In this manner, the recordable time of the PCM audio signal during the audio use mode becomes six times as long as the recordable time of the information signal in the video use mode. It is also to be noted that the sequential order in which the PCM audio signal Su is recorded in each of the segments can be freely varied by the selecting circuit. As a result, because of recording in the different segments, it becomes relatively easy to access different audio information recorded in the tracks 2A and 2B, without performing a lengthy search operation for a desired selection. Moreover, the PCM audio signal recorded in each segment is of the same form, thereby enhancing the simplicity of the recording arrangement.

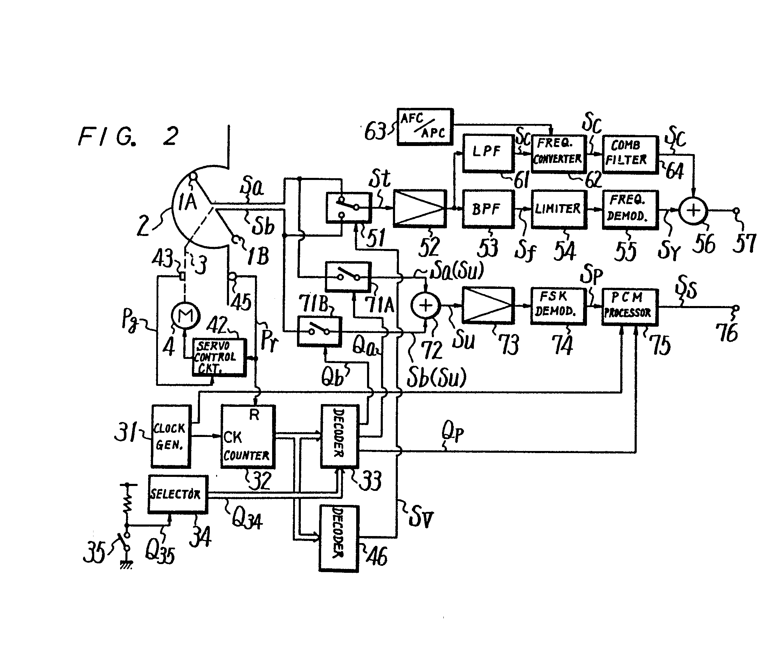

Referring now to Figure 2, a reproducing section of a helical scan VTR according to one embodiment of the invention will now be described. Elements corresponding to those previously described in the recording section of Figure 1 are identified by the same reference numerals and a detailed description thereof will be omitted for the sake of brevity. As shown, therein, during the reproduction operation, the magnetic head 45 reproduces the control pulse signal Pr from the servo control track 2C, which is synchronized with the vertical synchronizign signal Pv and supplies the control pulse signal Pr to the servo control circuit 42. In the same manner as previously described in regard to the recording section of Figure 1, the servo control circuit 42 in response to the control pulse signal Pr and the pulses Pg generated by the pulse generator 43 controls the motor 4 accurately to maintain the correct rotary speed and phase relation for the heads 1A and 1B.

The head 1A is coupled to a first video contact of a change-over switch 51 and to an input contact of a switch 71A. In like manner, the head 1B is connected to a second input contact of the change-over switch 51 and to an input contact of a switch 71B. During the video use mode, the change-over switch 51 is controlled to supply the combined video signal St recorded in the main section of each track 2A and 2B corresponding to the last 180° rotation of each head 1A and 1B with respect to the tracks 2A and 2B as a continuous signal to a reproducing amplifier 52. The combined video signal St from the reproducing amplifier 52 is supplied to a BPF 53 which separates the frequency-modulated luminance signal Sf therefrom. A limiter circuit 54 limits the level of the frequency-modulated luminance signal Sf from the BFP 53 and a frequency demodulation circuit 55 demodulates the output signal from the limiter circuit 54 to produce the original luminance component Sy, as shown in Figure 3A, which is supplied to one input of an adder 56. The combined video signal St is also supplied to an LPF 61 which separates the frequency-converted chrominance signal Sc therefrom. A frequency-converter 62 frequency re-converts the frequency-converted chrominance signal Sc to its original frequency band and corrects any time base error, thereby producing the original chrominance component Sc. An automatic frequency control (AFC) and automatic phase control (APC) circuit 63 may also be provided with respect to the frequency converter 62 to control the frequency and phase of the chrominance component Sc. The chrominance component Sc from the frequency converter 62 is supplied through a C-type comb filter 64 to eliminate cross-talk interference between adjacent tracks 2A and 2B, and then to another input of the adder 56 where it is added to the luminance component Sy to produce the original colour video signal at an output terminal 57.

The PCM audio signal Su reproduced from the heads 1A and 1B is supplied through the switches 71A and 71B, respectively, to an adder 72 which combines the PCM audio signal Su reproduced by each head 1A and 1B to produce a combined PCM audio signal Su. This signal Su is supplied from the adder 72 through a reproducing amplifier 73 to an FSK demodulation circuit 74 which is complementary to the FSK modulation circuit 23 of Figure 1 and which produces the compressed PCM audio signal Sp. A PCM processing circuit 75 processes the compressed PCM audio signal Sp from the FSK demodulation circuit 74 in a complementary manner to the characteristic imparted by the PCM processing circuit 22 in the recording section of Figure 1, thereby to produce the original analog audio signal Ss at the output thereof. In particular, the PCM processing circuit 75 expands the time base of the compressed PCM audio signal Sp supplied thereto, the PCM processing circuit 75 also includes a PCM decoding circuit which provides a characteristic complementary to the PCM encoding circuit of the PCM processing circuit 22 and digital-to-analog (D/A) converting circuit which returns the digitized audio signal to analog form thereby to produce the analog audio signal Ss at an output thereof. In addition, the PCM processing circuit 75 includes an error correcting decoder which decodes the PCM audio signal in accordance with the error correcting codes added by the PCM encoding circuit 22. The PCM processing circuit 75 is also supplied with clock pulses from the clock generator 31. The analog audio signal Ss from the PCM processing circuit 75 is then supplied to an audio signal output terminal 76.

The reproducing section of Figure 2 also utilizes the control circuit 30 of Figure 1 to produce the aforementioned control signals Qa, Qb and Qp. During the video use mode, the selection signal $Q_{35}$ is at a high or logic "1" level, whereby the selecting circuit 34 designates the count values $N_{32}$ of "9" and "4" so that the decoder 33 produces the switch control signals Qa and Qb with the phase relation shown in Figure 3D1. In this manner, the switch control signals Qa and Qb control the switches 71A and 71B to supply the PCM audio signal Su reproduced by the heads 1A and 1B during scanning by them of the overscan section of each track 2A and 2B, to the adder 72, with the relation shown in Figure 3H. In addction, the count value $N_{32}$ from the counter 32 is supplied to a decoder 46 which produces a signal Sv in synchronism with the vertical synchronizing signal and which is inverted during alternate field intervals Ta and Tb. The signal Sv from the decoder 46 is supplied to the change-over switch 51 so that it alternately supplies the video signal reproduced by the heads 1A and 1B as a continuous combined video signal St to the reproducing amplifier 52.

During reproduction in the audio use mode, in which the PCM audio signal Su is recorded, for example, in the form shown in Figure 8C, the selection signal $Q_{35}$ from the switch 35 is at a logic "0" level. Accordingly, the PCM audio signal Su recorded in the segments ⑤ and ⓪ to ④ as shown in Figures 3I and 8C, are reproduced by the heads 1A and 1B. The user, at such time, designates the count value $N_{32}$ by controlling the selectign circuit 34 so that only the PCM audio signal Su reproduced during a single time period in each field interval Ta and Tb is reproduced. For example, if it is desired to reproduce the PC audio signal only durung the time period $T_0$ in each field interval Ta and Tb, that is, corresponding to the segment ⓪ in each track 2A and 2B, the selecting circuit 34 is switched to designate the count values $N_{32}$ of "0" and "5", in much the same manner as previously described with respect to the recording section of Figure 1. As a result, the decoder 33 produces the switch control signals Qa and Qb with the phase relation shown in Figure 3D2 and also produces the control signal Qp as an OR product of the switch control signals Qa and Qb which is supplied to the PCM processing circuit 75 to enable it to process the PCM audio signal Sp supplied thereto only during the time period $T_0$ of each field interval.

It is to be appreciated that various modifications can be made. For example, if the frequency of the clock pulses from the clock generator 31 are, for example, 180 times as high as the field frequency, the segments ⑤ and ⓪ to ④ can be formed when the count value $N_{32}$ is "324" to "358" "0" to "34", "36" to "70", "72" to "106", "108" to "142", and "144" to "178", so that guard bands can be provided between the different segments as protective intervals against vibration from contact between the tape 2 and the heads 1A and 1B, drop-out and the like.

## Claims

1. Apparatus for recording an information signal comprising at least an audio signal in a plurality of successive oblique tracks (2A, 2B) on a record medium (2), the apparatus comprising:
audio signal processing means (22) for converting said audio signal into time-compressed digital form;
video signal processing means (13, 14, 19) for processing a video signal of said information signal to produce an output video signal;
transducer means (1A, 1B) for recording said output video signal and said digitized audio signal in said tracks (2A, 2B) on said record medium (2);
switch means (17A, 17B) for supplying said output video signal and said digitized audio signal to said transducer means (1A, 1B); and
control means (34, etc.) for controlling said switch means (17A, 17B) to supply said output video signal and said digitized audio signal to said transducer means (1A, 1B) during a video use mode so that said transducer means (1A, 1B) records said output video signal in a main section of each said track (2A, 2B) and said digitized audio signal in an overscan section of each said track (2A, 2B); characterized by:
said control means (34, etc.) also controlling said switch means (17A, 17B) to supply only said digitized audio signal to said transducer means (1A, 1B) during an audio use mode; and
timing mans (33) which operates such that said main section of each said track (2A, 2B) is divided into a plurality of segments (0 to 4) in the track length direction and said overscan section of each said track (2A, 2B) comprises one segment (5), each of said segments (0 to 5) having a substantially equal track length, so that in said audio use mode said transducer means (1A, 1B) selectively records said digitized audio signal in any arbitrary one of said segments (0 to 5) in said main section or said overscan section of each said track (2A, 2B) under control of further switch means (35).

2. Apparatus according to Claim 1 wherein said control means (34, etc.) includes counter means (32) for counting a predetermined number of time periods for each field interval of said video signal and producing a count value in response thereof, selector means (34) for selecting at least one desired one of said count value and producing an output signal corresponding thereof, and decoder means (33) for producing at least one switch control signal in response to said count value and said output signal from said selector means (34) and supplying said at least one switch control signal to said switch means (17A, 17B) to control said switch means (17A, 17B) to supply said output video signal and said digitized audio signal to said transducer means (1A, 1B) during said video use mode so that said transducer means (1A, 1B) records said output video signal in said main section of each said track (2A, 2B) and said digitized audio signal in said overscan section of each said track (2A, 2B), and to supply only said digitized audio signal to said transducer means (1A, 1B) during said audio use mode so that said transducer means (1A, 1B) records said digitized audio signal in at least one of said segments (0 to 5) in said main section or said overscan section of each said track (2A, 2B).

3. Apparatus according to Claim 2, wherein said control means (34, etc.) includes means (36) for producing a vertical synchronizing signal having a period equal to a field interval of said video signal, and clock generator means (31) for producing clock pulses, and said counter means (32) produces said count value in response to said clock pulses and said vertical synchronizing signal.

4. Apparatus according to Claim 3 wherein said control means (34, etc.) includes frequency divider means (38) for producing a frequency-divided signal in response to said vertical synchronizing signal and having a period equal to twice that of said vertical synchronizing signal, and said counter means (32) includes a reset input terminal supplied with said frequency-divided signal and a clock input terminal supplied with said clock pulses.

5. Apparatus according to Claim 4 wherein said video signal includes a vertical synchronizing signal and said clock generator means (31) produces a substitute vertical synchronizing signal having a period substantially equal to that of said vertical synchronizing signal of said video signal, and said control means (34, etc) includes switch means (37) for supplying one of said vertical synchronizing signal of said video signal and said substitute vertical synchronizing signal to said frequency divider means (38), and switch control means (35) for controlling said switch means (37) to switch said vertical synchronizing signal of said video signal to said frequency divider means (38) during said video use mode and to switch said substitute vertical synchronizing signal to said frequency divider means (38) during said audio use mode.

6. Apparatus according to Claim 2 wherein said selector means (34) includes switch control means (35) for producing a selection signal corresponding to one of said video use mode und said audio use mode, and count value selector means for producing said output signal in response to said selection signal.

7. Apparatus according to Claim 6 wherein said count value selector means selects a predetermined count value corresponding to a time period when said transducer means (1A, 1B) records said digitized audio signal in said overscan section of said track (2A, 2B) during said video use mode, and said selector means (34) can be varied to select a count value corresponding to a time period when said transducer means (1A, 1B) records said digitized audio signal in at least one of said segments (0 to 5) in said overscan section or said main section of each said track (2A, 2B) during said audio use mode.

8. Apparatus according to Claim 7, wherein said deocder means (33) produces two switch control signals and a control signal corresponding to a combination of said switch control signals and supplies said control signal to said audio signal processing means (22) to enable said audio signal processing means (22) to process said digitized audio signal only during time periods corresponding to said count value selected by said selector means (34).

**Patentansprüche**

1. Aufzeichnungsanordnung für ein zumindest ein Audiosignal enthaltendes Informationssignal in mehreren aufeinander-folgenden Schrägtspuren (2A, 2B) auf einem Aufzeichnungsmedium (2)

mit einer Audiosignalverarbeitungseinrichtung (22) zur Umwandlung des Audiosignals in ein zeitkomprimiertes Digitalsignal,

mit einer Videosignalverarbeitungseinrichtung (13, 14, 19) zur Verarbeitung eines in dem Informationssignals enthaltenden Videosignals und zur Erzeugung eines Ausgangsvideosignals,

mit einer Wandlereinrichtung (1A, 1B) zum Aufzeichnen des Ausgangsvideosignals und des digitalisierten Audiosignals in den Spuren (2A, 2B auf dem Aufzeichnungsmedium (2),

mit einer Schalteinrichtung (17A, 17B) zur Zufuhr des Ausgangsvideosignals und des digitalisierten Audiosignals an die Wandlereinrichtung (1A, 1B)

sowie mit einer Steuereinrichtung (34 usw.) zur Steuerung der Schalteinrichtung (17A, 17B) in der Weise, daß der Wanldereinrichtung (1A, 1B) während einer Videobetriebsart das Ausgangsvideosignal und das digitalisierte Audiosignal zuführbar ist, so daß die Wandlereinrichtung (1A, 1B) in einem Hauptabschnitt jeder Spur (2A, 2B) das Ausgangsvideosignal und in einem "Überabtastabschnitt" jeder Spur (2A, 2B) das digitalisierte Audiosignal aufzeichnen, dadurch gekennzeichnet

daß die Steuereinrichtung (34 usw.) während einer Audiobetriebsart die Schalteinrichtung (17A, 17B) in der Weise steuert, daß der Wandlereinrichtung (1A, 1B) nur das digitaliserte Audiosignal zuführbar ist,

und daß eine Zeitsteuereinrichtung (33) bewirkt, daß jede der Spuren (2A, 2B) in Spurlängsrichtung in mehrere Segmente (0 bis 4) unterteilt wird und der Überabtastabschnitt jeder Spur (2A, 2B) ein Segment (5) umfaßt, wobei alle diese Segmente (0 bis 5) eine im wesentlichen gleiche Spurlänge haben, so daß die Wandlereinrichtung (1A, 1B) in der Audiobetriebsart das digitalisierte Audiosignal unter dem Steuereinfluß einer weiteren Schalteinrichtung (35) in einem beliebigen der Segmente (0 bis 5) in dem Hauptabschnitt oder dem Überabtastabschnitt jeder Spur (2A, 2B) aufzeichnen.

2. Anordnung nach Anspruch 1, bei dem die Steuereinrichtung (34 usw.) enthält:

eine Zähleinrichtung (32) zum Abzählen einer vorbestimmten Anzahl von Zeitperioden für jedes Teilbildintervall des Videosignals und zur Erzeugung eines Zählwerts abhängig hiervon,

eine Wähleinrichtung (34) zum Auswählen wenigstens eines gewünschten Zählwerts und zur Erzeugung eines Ausgangssignals, das diesem Zählwert entspricht,

und eine Dekodiereinrichtung (33) zur Erzeugung wenigstens eine Schaltersteuersignals abhängig von dem Zählwert und dem Ausgangssignal der Wähleinrichtung (34) und zur Lieferung des wenigstens einen Schaltersteuersignals an die Schalteinrichtung (17A, 17B), um diese so zu steuern, daß sie

während der Videobetriebsart das Ausgangsvideosignal und das digitalisierte Audiosignal an die Wandlereinrichtung (1A, 1B) legen, so daß diese (1A, 1B) des Ausgangsvideosignal in dem Hauptabschnitt jeder Spur (2A, 2B) und das digitaliserte Audiosignal in dem Überabtastabschnitt jeder Spur (2A, 2B) aufzeichnen, und

während der Audiobetriebsart nur das digitaliserte Audiosignal an die Wandlereinrichtung (1A,

1B) legen, so daß diese das digitalisierte Audiosignal in wenigstens einem der Segmente (0 bis 5) in dem Hauptabschnitt oder dem Überabtastabschnitt jeder Spur (2A, 2B) aufzeichnen.

3. Anordnung nach Anspruch 2, bei dem die Steuereinrichtung (34 usw.) enthält:

Mittel (36) zur Erzeugung eines Vertikalsynchronsignals mit einer Periode, die so groß ist wie ein Teilbildintervall des Videosignals, und eine Taktgeneratoreinrichtung (31) zur Erzeugung von Taktimpulsen,

wobei die Zähleinrichtung (32) den Zählwert in Abhängigkeit von den Taktimpulsen und dem Vertikalsynchronsignal erzeugt.

4. Anordnung nach Anspruch 3, bei dem die Steuereinrichtung (34 usw.) eine Frequenzteileranordnung (38) enthält, die in Abhängigkeit von dem Vertikalsynchronsignal ein frequenzgeteiltes Signal erzeugt, dessen Periode doppelt so groß ist wie diejenige des Vertikalsynchronsignals,

und bei dem die Zähleinrichtung (32) einen Rücksetzeingang, dem das frequenzgeteilte Signal zuführbar ist und einem Takteingang besitzt, dem die Taktimpulse zuführbar sind.

5. Anordnung nach Anspruch 4, bei dem das Videosignal ein Vertikalsynchronsignal enthält und die Taktgeneratoreinrichtung (31) ein Ersatz-Vertikalsynchronsignal erzeugt, dessen Periode im wesentlichen so groß ist wie diejenige des Vertikalsynchronsignals des Videosignals,

um bei dem die Steuereinrichtung (34 usw.) eine Schalteinrichtung (37) enthält, um entweder das Vertikalsynchronsignal des Videosignals oder das Ersatz-Vertikalsynchronsignal an die Frequenzteileranordnung (38) zu legen, sowie eine Schalterstereinrichtung (35), um die Schalteinrichtung (37) derart zu steuern, daß während der Videoobtriebsart das Vertikalsynchronsignal des Videosignals und während der Audiobetriebsart das Ersatz-Vertikalsynchronsignal an die Frequenzteileranordnung (38) geschaltet ist.

6. Anordnung nach Anspruch 2, bei dem die Wähleinrichtung (34) eine Schaltersteuereinrichtung (35) zur Erzeugung eines der Videobetriebsart bzw. der Audiobetriebsart entsprechenden Wählsignal enthält, sowie eine Zählwertauswahleinrichtung zur Erzeugung des Ausgangssignals abhängig von dem Wählsignal.

7. Anordnung nach Anspruch 6, bei dem die Zählwertauswahleinrichtung einen vorbestimmten Zählwert auswählt, der der Zeitperiode entspricht, in der die Wandlereinrichtung (1A, 1B) während der Videobetriebsart das digitalisierte Audiosignal in dem Überabtastabschnitt jeder Spur (2A 2B) aufzeichnet, wobei die Wähleinrichtung (24) so variiert werden kann, daß sie einen Zählwert auswählt, der der Zeitperiode entspricht, in der die Wandlereinrichtung (1A, 1B), während der Audiobetriebsart das digitalisierte Audiosignal in wenigstens einem der Segmente (0 bis 5) in dem Überabtastabschnitt oder dem Hauptabschnitt jeder Spur (2A, 2b) aufzeichnet.

8. Anordnung nach Anspruch 7, bei dem die Dekodiereinrichtung (33) zwei Schaltersteuersignale sowie ein einer Kombination dieser Schaltersteuersignale entsprechendes Steuersignal erzeugt und dieses der Audiosignalverarbeimungseinrichtung (22) zuführt, um diese derart zu aktivieren, daß sie das digitalisierte Audiosignal nur während solcher Zeitperioden verarbeitet, die dem von der Wähleinrichtung (34) ausgewählten Zählwert entsprechen.

## Revendications

1. Dispositif pour enregistrer un signal d'information comprenant au moins un signal audio, sur une pluralité de pistes successives obliques (2A, 2B) sur un support d'enregistrement (2), le dispositif comprenant:

des moyens de traitement de signal audio (22) pour convertir ledit signal audio en une forme numérique comprimée dans le temps;

des moyens de traitement de signal vidéo (13, 14, 19) pour traiter un signal vidéo dudit signal d'information, pour produire un signal de sortie vidéo;

des moyens transducteurs (1A, 1B) pour enregistrer ledit signal de sortie vidéo et ledit signal audio numérisé sur lesdites pistés (2A, 2B) sur ledit support d'enregistrement (2);

des moyens de commutation (17A, 17B) pour fournir ledit signal de sortie vidéo et ledit signal audio numérisé auxdits moyens transducteurs (1A, 1B); et

des moyens de commande (34, etc) pour commander lesdits moyens de commutation (17A, 17B) pour fournir ledit signal de sortie vidé et ledit signal audio numérisé auxdits moyens transducteurs (1A, 1B) au cours d'un mode d'utilisation vidéo, de manière que lesdits moyens transducteurs (1A, 1B) enregistrent ledit signal de sortie vidéo dans une partie principale de chacune desdites pistes (2A, 2B) et ledit signal audio numérisé dans une partie annexe de chacune desdites pistes (2A, 2B); caractérisé par:

le fait que lesdits moyens de commande (34, etc) commandent aussi lesdits moyens de commutation (17A, 17B) pour ne fournir ledit signal audio numérisé auxdits moyens transducteurs (1A, 1B) que pendant un mode d'utilisation audio; et

le fait que des moyens de cadencement (33) opèrent de façon que la partie principale de chacune desdites pistes (2A, 2B) soit divisée en une pluralité de segments (0 à 4) dans la direction longitudinale de la piste et que ladite partie annexe de chacune desdites pistes (2A, 2B) comprenne un segment (5), chacun desdits segments (0 à 5) ayant une longueur de piste sensiblement égale, de sorte que, dans ledit mode d'utilisation audio, lesdits moyens transducteurs (1A, 1B) enregistrent sélectivement ledit signal audio numérisé sur un segment quelconque, arbitraire parmi lesdits segments (0 à 5) dans ladite partie principale ou ladite partie annexe de chacune desdites pistes (2A, 2B) sous la commande d'autres moyens de commutation (35).

2. Dispositif selon revendication 1, dans lequel lesdits moyens de commande (34, etc) comprennent des moyens compteurs (32) pour compter un nombre prédéterminé de périodes de temps pour chaque intervalle de trame dudit signal vidéo et produire une valeur de comptage en réponse à cela, des moyens sélecteurs (34) pour sélectionner au moins une valeur désirée desdites valeurs de comptage et produire un signal de sortie correspondant, et des moyens décodeurs (33) pour produire au moins un signal de commande de commutateur en réponse à ladite valeur de comptage et audit signal de sortie provenant desdits moyens sélecteurs (34) et fournir ledit signal de commande de commutateur auxdits moyens de commutation (17A, 17B), pour commander lesdits moyens de commutation (17A, 17B), pour fournir ledit ledit signal de sortie vidéo et ledit signal audio numérisé auxdits moyens transducteurs (1A, 1B) lors dudit mode d'utilisation vidéo, de manière que lesdits moyens transducteurs (1A, 1B) enregistrent ledit signal de sortie vidéo dans ladite partie principale de chacune desdites pistes (2A, 2B) et ledit signal audio numérisé dans ladite partie annexe de chacune desdites pistes (2A, 2B), et pour ne fournir que ledit signal audio numérisé auxdits moyens transducteurs (1A, 1B) au cours dudit mode d'utilisation audio, de manière que lesdits moyens transducteurs (1A, 1B) enregistrent ledit signal audio numérisé sur au moins l'un desdits segments (0 à 5) dans ladite partie principale ou ladite partie annexe de chacun desdites pistes (2A, 2B).

3. Dispositif selon revendication 2, dans lequel lesdits moyens de commande (34, etc) comprennent des moyens (36) pour produire un signal de synchronisation verticale ayant une période égale à un intervalle de trame dudit signal vidéo, et des moyens générateurs de signaux d'horloge (31) pour produire des impulsions d'horloge, et lesdits moyens compteurs (32) produisent ladite valeur de comptage en réponse auxidites impulsions d'horloge et audit signal de synchronisation verticale.

4. Dispositif selon revendication 3, dans lequel lesdits moyens de commande (34, etc) comportent des moyens diviseurs de fréquence (38) pour produire un signal à fréquence divisée, en réponse audit signal de synchronisation verticale, et ayant une période égale à deux fois celle dudit signal de synchronisation verticale, et lesdits moyens compteurs (32) comprennent une borne d'entrée de réinitialisation qui reçoit ledit signal à fréquence divisée, et une borne d'entrée d'horloge qui reçoi lesdites impulsions d'horloge.

5. Dispositif selon revendication 4, dans lequel ledit signal vidéo comprend un signal de synchronisation verticale et lesdits moyens générateurs de signaux d'horloge (31) produisent un signal de substitution de synchronisation verticale ayant une période sensiblement égale à celle dudit signal de synchronisation verticale dudit signal vidéo, et lesdits moyens de commande (34, etc) comprennent des moyens de commutation (37) pour fournir l'un desdits signaux de synchronisation verticale dudit signal vidéo et dudit signal de substitution de synchronisation auxdits moyens diviseurs de fréquence (38), et des moyens de commande de commutation (35) pour commander lesdits moyens de commutation (37), afin de commuter ledit signal de synchronisation verticale dudit signal vidéo sur lesdits moyens diviseurs de fréquence (38) au cours dudit mode d'utilisation vidéo, et afin de commuter ledit signal de substitution de synchronisation verticale sur lesdits moyens diviseurs de fréquence (38) au cours dudit mode d'utilisation audio.

6. Dispositif selon revendication 2, dans lequel lesdits moyens sélecteurs (34) comprennent des moyens de commande de commutateur (35) pour produire un signal de sélection correspondant à l'un desdits modes d'utilisation, vidéo et audio, et des moyens sélecteurs de valeur de comptage pour produire ledit signal de sortie en réponse audit signal de sélection.

7. Dispositif selon revendication 6, dans lequel lesdits moyens sélecteurs de valeur de comptage choisissent une valeur de comptage prédéterminée correspondant à une période de temps, lorsque lesdits moyens transducteurs (1A, 1B) enregistrent ledit signal audio numérisé dans ladite partie annexe de chacune desdites pistes (2A, 2B) au cours dudit mode d'utilisation vidéo, et lesdits moyens sélecteurs (34) peuvent être modifiés pour sélectionner une valeur de comptage correspondant à une période de temps lorsque lesdits moyens transducteurs (1A, 1B) enregistrant ledit signal audio numérisé sur au moins l'un desdits segments (0 à 5) dans ladite partie annexe de ladite partie principale de chacune desdites pistes (2A, 2B) au cours, dudit mode d'utilisation audio.

8. Dispositif selon revendication 7, dans lequel lesdits moyens décodeurs (33) produisent deux signaux de commande de commutateur et un signal de commande correspondant à une combinaison desdits signaux de commande de commutateur, et fournissent ledit signal de commande auxdits moyens de traitement de signal audio (22) pour permettre auxdits moyens de traitement de signal audio (22) de ne traiter ledit signal audio numérisé que pendant des périodes de temps correspondant à ladite valeur de comptage choisie par lesdits moyens sélecteurs (34).

LPF — 12
11
FREQ. MODULATOR — 13
Sy
BPF — 18
Sc
FREQ. CONVERTER — 19
Sc
St
14
15
16 *
Sa 17A
1A
0 1
Sb 1B
0 1
17B
2
45
3

Ss
21

VERTICAL SYNC. SEPARATOR — 36
Pv *
Pv
1 0 — 37
FREQ. DIVIDER — 38
Pu

PCM PROCESSOR — 22
Sp
FSK MODULATOR — 23
Su
24

F I G. 1

30
Pv
CLOCK GEN. — 31
R COUNTER CK — 32
DECODER — 33
Qp
Qb
Qa
Q34

SELECTOR — 34
35
Q35
Q *

DECODER — 41
Pr

44
43
Pg
SERVO CONTROL CKT. — 42
M — 4

FIG. 2

Ta Tb 216° 36° 180°

T0 T1 T2 T3 T4  T0 T1 T2 T3 T4

FIG. 3A Sy

Pv Pv

FIG. 3B Pu

FIG. 3C N32  8 9 0 1 2 3 4 5 6 7 8 9 0 1 2 3 4 5 6 7 8 9 0 1 2 3 4 5 6

FIG. 3D₁ Qa Qb

FIG. 3D₂ Qa Qb

FIG. 3D₃ Qa Qb

FIG. 3D₄ Qa Qb

FIG. 3E₁

FIG. 3E₂ SP

FIG. 3E₃ (Su)

FIG. 3E₄

FIG. 3F ( Sa / Sb )

FIG. 3G ( (2A)Sa / (2B)Sb )

FIG. 3H ( Sa(Su) / Sb(Su) )

FIG. 3I ( Sa / Sb )

FIG. 4

FIG. 5

FIG. 6

FIG. 7

FIG. 8A

FIG. 8B

FIG. 8C